# EUROPEAN PATENT APPLICATION

(11) **EP 4 665 072 A1**
(43) Date of publication of application: **17.12.2025**
(21) Application number: 23920537.0
(22) Date of filing: 10.02.2023
(51) Int. Cl.: H04W 76/15

(54) **LINK OPERATION MODE SWITCHING METHOD AND APPARATUS, COMMUNICATION DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: LU, Liuming, Dongguan, Guangdong 523860 (CN); YANG, Ning, Dongguan, Guangdong 523860 (CN); ZHANG, Jun, Dongguan, Guangdong 523860 (CN)
(74) Representative: RGTH
(86) International application number: PCT/CN2023/075514
(87) International publication number: WO 2024/164329

(57) **Abstract**

A link operation mode switching method and apparatus, a communication device, and a storage medium, relating to thel technical field of wireless communications. The method is performed by a first device, and at least two links are established between the first device and a second device, wherein the first device is a non-access point (AP) multi-link device, and the second device is an AP multi-link device, The method comprises: receiving link operation mode switching information sent by a second device (601), the link operation mode switching information being used for instructing at least one non-AP multi-link device to switch a link operationl mode of a first link, and the first link being one of at least two links; and when a first device belongs to at least one non-AP multi-link device, switching the link operation mode of the first link between the first device and the second device according to the link operation mode switching information (602).

## Description

### TECHNICAL FIELD

The present disclosure relates to the technical field of wireless communications, and in particular, to a method for link operation mode switching, an apparatus, a communication device and a storage medium.

### BACKGROUND

In a wireless local area network (WLAN), a multi-link device (MLD) can establish multiple wireless links simultaneously to improve its wireless transmission capability.

In the related art, multiple affiliated access points (APs) or affiliated stations (STAs) may be included in the MLD, and each affiliated AP/affiliated STA may establish a corresponding link with another MLD device.

### SUMMARY

Embodiments of the present disclosure provide a method for link operation mode switching, an apparatus, a communication device and a storage medium. The technical solutions are as follows.

In one aspect, the embodiments of the present disclosure provide a method for link operation mode switching, where the method is performed by a first device, and at least two links are established between the first device and a second device, the first device being a non-access point (non-AP) multi-link device and the second device being an AP multi-link device; and the method includes:
receiving link operation mode switch information sent by the second device, where the link operation mode switch information is used for indicating at least one non-AP multi-link device to switch a link operation mode of a first link, the first link being one of the at least two links; and
switching, according to the link operation mode switch information, the link operation mode of the first link between the first device and the second device in a case where the first device belongs to the at least one non-AP multi-link device.

In one aspect, the embodiments of the present disclosure provide a method for link operation mode switching, where the method is performed by a second device, and the second device has at least two links established with at least one non-AP multi-link device, the second device being an AP multi-link device; and the method includes:
sending link operation mode switch information to the at least one non-AP multi-link device, where the link operation mode switch information is used for indicating the at least one non-AP multi-link device to switch a link operation mode of a first link, the first link being one of the at least two links; and
switching, according to the link operation mode switch information, the link operation mode of the first link between a first device and the second device, the first device belonging to the at least one non-AP multi-link device.

In another aspect, the embodiments of the present disclosure provide an apparatus for link operation mode switching, and the apparatus includes:
a receiving module, configured to receive link operation mode switch information sent by a second device, where the link operation mode switch information is used for indicating at least one non-AP multi-link device to switch a link operation mode of a first link, the first link being one of at least two links; and the at least two links are established between a first device and the second device, the first device being an non-AP multi-link device and the second device being an AP multi-link device; and
a switching module, configured to switch, according to the link operation mode switch information, the link operation mode of the first link between the first device and the second device in a case where the first device belongs to the at least one non-AP multi-link device.

In another aspect, the embodiments of the present disclosure provide an apparatus for link operation mode switching, and the apparatus includes:
a sending module, configured to send link operation mode switch information to at least one non-AP multi-link device, where the link operation mode switch information is used for indicating the at least one non-AP multi-link device to switch a link operation mode of a first link, the first link being one of at least two links; and
a switching module, configured to switch, according to the link operation mode switch information, the link operation mode of the first link between a first device and a second device, the first device belonging to the at least one non-AP multi-link device; where the second device has at least two links established with the at least one non-AP multi-link device, the first link being one of the at least two links and the second device being an AP multi-link device.

In yet another aspect, the embodiments of the present disclosure provide a communication device, and the communication device is a multi-link device. The communication device includes a processor, a memory and a transceiver, the memory has a computer program stored thereon, and the computer program is configured to, when executed by the processor, to implement the method for link operation mode switching above.

In yet another aspect, the embodiments of the present disclosure further provide a computer-readable storage medium, where the storage medium has a computer program stored thereon. The computer program is loaded and executed by a processor to implement the method for link operation mode switching above.

In another aspect, a computer program product is provided, and the computer program includes computer instructions stored in a computer readable storage medium. A processor of the communication device is configured to read the computer instructions from the computer-readable storage medium and execute the computer instructions, to enable the communication device to perform the method for link operation mode switching above.

In another aspect, a chip is provided, and the chip is configured to run in a communication device, to enable the communication device to perform the method for link operation mode switching.

In another aspect, a computer program is provided, and the computer program, when executed by a processor of a communication device, implements the method for link operation mode switching.

The technical solutions provided in the embodiments of the present disclosure may bring the following beneficial effects: multiple link operation modes are set for the link established by the multi-link device, the non-AP multi-link device may receive the link operation mode switch information sent by the AP multi-link device, and when the non-AP multi-link device is one of at least one non-AP multi-link device indicated by the link operation mode switch information, the non-AP multi-link device may switch, according to the link operation mode switch information, the link operation mode of the first link between the non-AP multi-link device and the AP multi-link device, thereby improving the flexibility of link management between the multi-link devices.

### BRIEF DESCRIPTION OF THE DRAWINGS

In order to illustrate the technical solutions in the embodiments of the present disclosure more clearly, drawings required in the description of the embodiments will be briefly introduced below. It is apparent that the drawings in the following description are merely some embodiments of the present disclosure. For those of ordinary skill in the art, other drawings can also be obtained according to these drawings without creative efforts.
FIG. 1 is a schematic diagram of a network architecture of a communication system provided by an embodiment of the present disclosure.
FIG. 2 is a schematic diagram of a reference model of a multi-link device provided by an embodiment of the present disclosure.
FIG. 3 is a timing diagram of multi-link discovery and setup provided by an exemplary embodiment of the present disclosure.
FIG. 4 is a structural schematic diagram of a beacon interval (BI) involved in the present disclosure.
FIG. 5 is a schematic diagram of request and response frame exchange during an (announcement transmission interval) ATI period involved in the present disclosure.
FIG. 6 is a flowchart of a method for link operation mode switching provided by an embodiment of the present disclosure.
FIG. 7 is a flowchart of a method for link operation mode switching provided by an embodiment of the present disclosure.
FIG. 8 is a schematic diagram of link operation mode switching involved in an embodiment of the present disclosure.
FIG. 9 is a flowchart of a method for link operation mode switching provided by an embodiment of the present disclosure.
FIG. 10 is a format definition diagram of an operation mode switch announcement element involved in an embodiment illustrated in FIG. 9.
FIG. 11 is a format definition diagram of an operation mode switch announcement control field involved in an embodiment illustrated in FIG. 9.
FIG. 12 is a schematic diagram of operation mode switching provided by an exemplary embodiment of the present disclosure.
FIG. 13 is a schematic diagram of operation mode switching provided by an exemplary embodiment of the present disclosure.
FIG. 14 is a schematic diagram of operation mode switching provided by an exemplary embodiment of the present disclosure.
FIG. 15 is a block diagram of an apparatus for link operation mode switching provided by an embodiment of the present disclosure.
FIG. 16 is a block diagram of an apparatus for link operation mode switching provided by an embodiment of the present disclosure.
FIG. 17 is a structural schematic diagram of a communication device provided by an embodiment of the present disclosure.

### DETAILED DESCRIPTION

In order to make objectives, technical solutions and advantages of the present disclosure more clearly, implementations of the present disclosure will be further described in detail below with reference to the drawings.

The network architecture and service scenarios described in the embodiments of the present disclosure are intended to illustrate the technical solutions of the embodiments of the present disclosure more clearly, and do not constitute a limitation on the technical solutions provided by the embodiments of the present disclosure. Those of ordinary skill in the art could appreciate that, with the evolution of the network architecture and the emergence of new service scenarios, the technical solutions provided in the embodiments of the present disclosure are also applicable to similar technical problems.

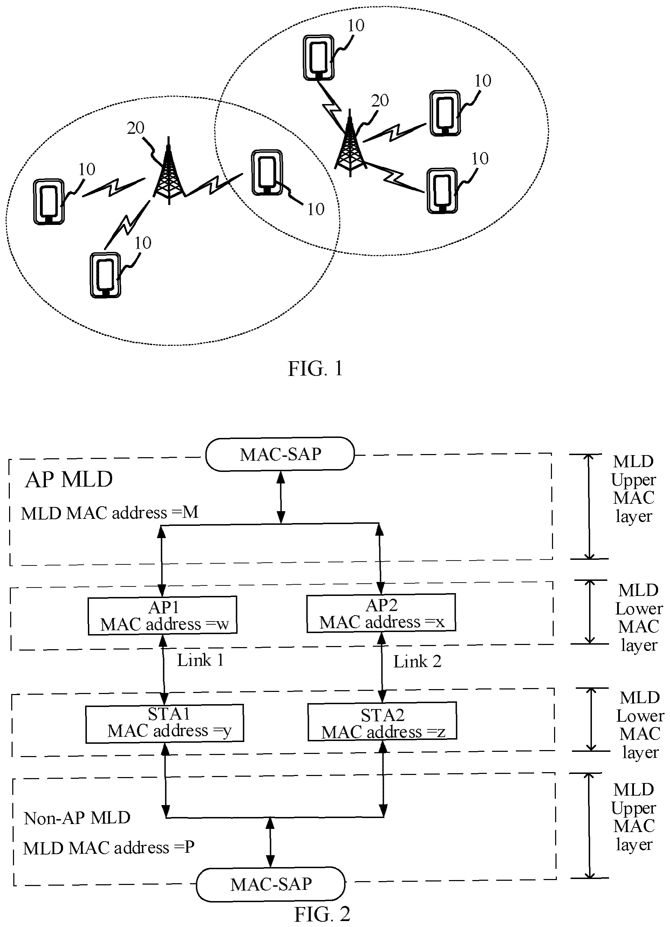

Referring to FIG. 1, a schematic diagram of a network architecture of a communication system provided by an embodiment of the present disclosure is illustrated. The network architecture may include: station(s) 10 and access point(s) 20.

The number of stations 10 is typically multiple, and each access point 20 may be associated with one or more stations 10. The station 10 may include various handheld devices with wireless communication functions, vehicle-mounted devices, wearable devices, computing devices or other processing devices connected to a wireless modem, as well as various forms of user equipment (UE), mobile stations (MS), terminal devices, and the like. For convenience of description, in the embodiments of the present disclosure, the above-mentioned devices are collectively referred to as stations (STAs).

The access point 20 is an apparatus deployed in an access network to provide a wireless communication function for the station 10, and may also be referred to as an Access Point (AP). The access point 20 may include various forms of wireless routers, wireless switches, or wireless relay devices, and the like.

The above station 10 and/or access point 20 may be a multi-link device.

Optionally, not illustrated in FIG. 1, the above network architecture also includes other network devices, such as, a gateway device.

The station 10 and the access point 20 may be associated and communicated with each other through wireless local area network technology, for example, communicated with each other based on the IEEE 802.11 protocol.

The IEEE 802.11 BF Working Group is discussing the development of a protocol to specify how to implement WLAN sensing using WLAN signals that comply with the IEEE 802.11 protocol. The WLAN terminals participating in sensing may have roles such as a sensing session initiator, a sensing session responder, a sensing signal sender or a sensing signal receiver.

A WLAN sensing session includes one or more of the following stages: session setup, sensing measurement, sensing reporting and session termination. The WLAN terminal may have one or more roles in one sensing session, for example, the sensing session initiator may only be the sensing session initiator, or may also be the sensing signal sender, or may also be the sensing signal receiver, or may be both the sensing signal sender and the sensing signal receiver.

Before introducing the technical solutions of the present disclosure, some technical knowledge involved in the present disclosure is introduced and illustrated firstly.

### 1) Multi-link device (Multiple Links Device, MLD)

In related standard protocols, functions that could support multiple links are defined. According to the definition for two sides of communication in the standard protocols, one is STA MLD and the other is AP MLD. The STA MLD and the AP MLD that have established multiple links with each other may take the advantage of multi-link to send and receive data on the multiple links, so as to achieve advantages such as high throughput and/or low delay.

In conventional single-link devices, each single-link device has a media access control (MAC) address, and the single-link device may be identified by the single MAC address. In multi-link devices defined in the related standards, because there are multiple links in a multi-link device, each link has an independent MAC address, and then, each multi-link device also has a single multi-link device MAC address (MLD MAC address).

FIG. 2 illustrates a schematic diagram of a reference model of a multi-link device. As illustrated in FIG. 2, there are two links between two multi-link devices: Link 1 and Link 2, where in a lower MAC layer, each multi-link device has an independent link MAC address (or known as a wireless medium (WM) MAC address) on each link; and meanwhile, there is a single MLD MAC address in an upper MAC layer.

### 2) Multi-link discovery and multi-link setup

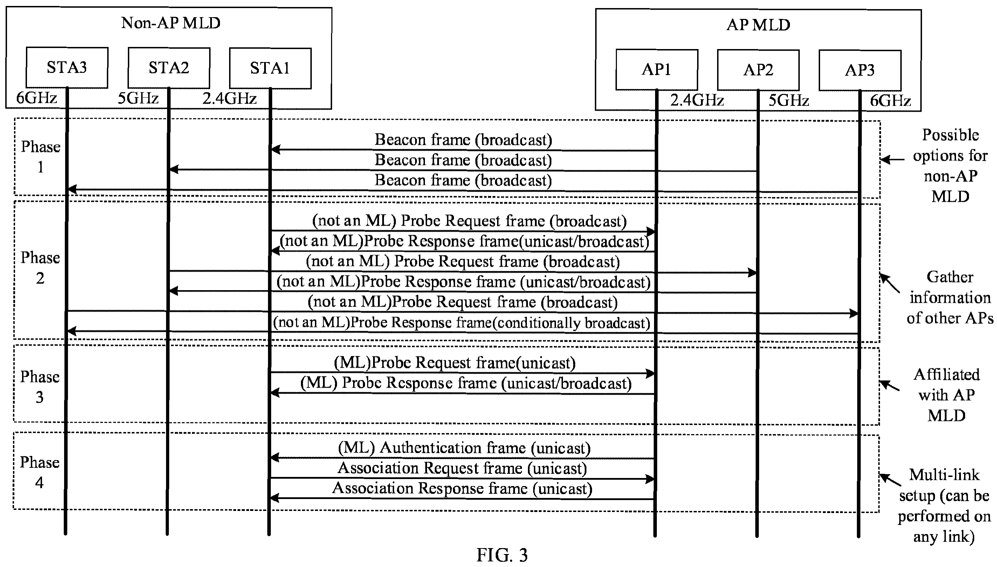

Referring to FIG. 3, a timing diagram of multi-link discovery and set involved in an exemplary embodiment of the present disclosure is illustrated. As illustrated in FIG. 3, before initiating a multi-link setup with the AP MLD, the non-AP MLD gathers information about the AP MLD and each affiliated AP that is interested in by using one or more of the following manners:
1) performing passive scanning procedure or active scanning procedure related to non-multi-link operations specified in the IEEE 802.11 standard through each of its affiliated STAs of the non-AP MLD; or
2) transmitting a multi-link probe request on any link that the AP MLD is operating on through one of its affiliated STAs of the non-AP MLD, to obtain complete information about the AP MLD and its affiliated APs.

As illustrated in FIG. 3, the non-AP MLD and the AP MLD perform the multi-link setup by exchanging an association request or association response (Association Request/Response) frame on one of multiple links requested to be set up. Where the Association Request/Response frame carries a basic multi-link element, and the element is used for the non-AP MLD that performs the multi-link setup to indicate, in the association request frame, multiple links requested to be set up as well as their capabilities and operating parameters; and the AP MLD indicates links that are accepted to set up and links that are rejected to set up among the multiple links requested to be set up as well as capabilities and operating parameters of the requested links in the association response frame.

In a case where the multi-link is set up successfully, the AP MLD assigns an association identifier (AID) to the non-AP MLD, and all STAs affiliated with the non-AP MLD have the same AID (i.e., the AID assigned to the non-AP MLD during the multi-link setup procedure). After the multi-link setup between the non-AP MLD and the AP MLD is completed, the non-AP MLD and the AP MLD set up multiple links for multi-link operation, while the non-AP MLD is associated with the AP MLD (i.e., phase 3 or 4).

### 3) Millimeter wave communication technology

IEEE 802.11ad is a Wi-Fi communication technology that provides multi-Gbps throughput using the unlicensed frequency band of the millimeter waveband; while IEEE 802.11ay is a Wi-Fi communication technology that is based on IEEE 802.11ad and provides a throughput of up to 100 Gb/s by further adopting technologies such as Multiple-In Multiple-Out (MIMO), channel bonding, channel access optimization and advanced beamforming training.

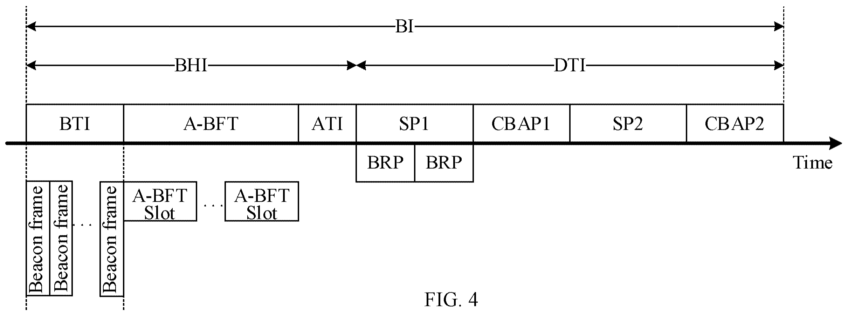

For the media access control (MAC) technology for millimeter waveband communications, IEEE 802.11ay, similar to 802.11ad, organizes media access at the beacon interval (BI). Referring to FIG. 4, a schematic diagram of a BI structure involved in the present disclosure is illustrated. As illustrated in FIG. 4, a typical BI is mainly composed of two access periods: a beacon header interval (BHI) and a data transmission interval (DTI).

Beacon transmission interval (BTI): used for an AP or a personal basic service set (PBSS) control point (PBSS PCP) to transmit beacon frames.

Association beamforming training (A-BFT): used for a station to perform beamforming training with a station that transmits beacon frames during the previous BTI.

The A-BFT is slotted and may consist of multiple A-BFT slots. The station may randomly select one of the slots to transmit a sector sweep (SSW) frame or a short SSW frame. In this case, conflicts may occur when two or more stations select the same slot. To accommodate a larger number of stations attempting to access during the A-BFT period, IEEE 802.11ay supports a maximum of 40 A-BFT slots per beacon interval (BI).

Announcement transmission interval (ATI): used for the AP/PCP to exchange management frames with beam-trained stations.

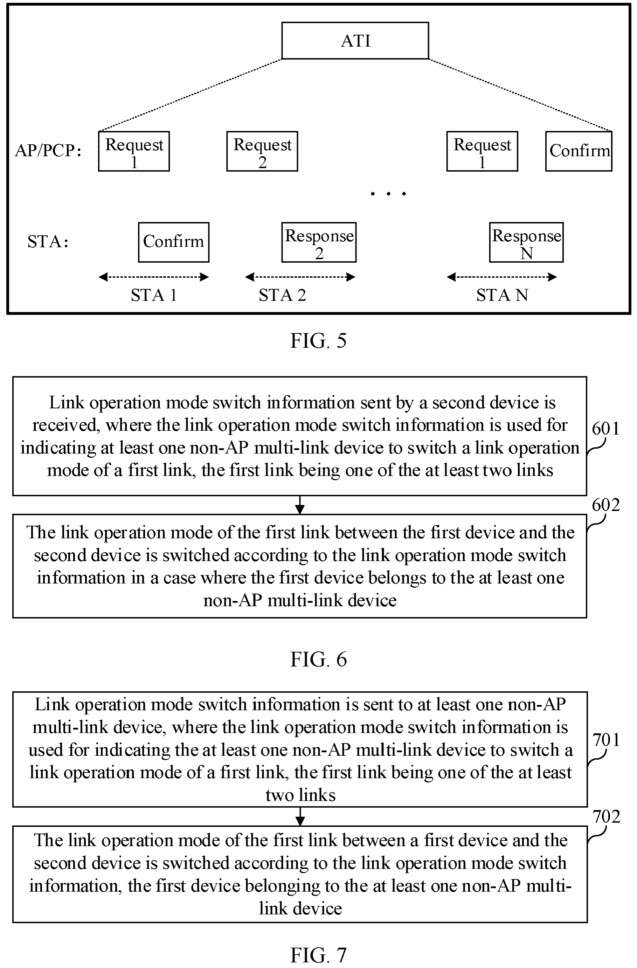

As illustrated in FIG. 5, a schematic diagram of request and response frame exchange between an AP or PCP and an arbitrary subset of stations during the ATI period involved in the present disclosure is illustrated. As illustrated in FIG. 5, the AP or PCP initiates all frame exchange sequences that occur during the ATI period. Once the ATI starts, the AP or the PCP may immediately start transmission of request frames, or may delay the transmission of request frames in a case where the medium is determined to be busy by the CCA mechanism.

The DTI provides different types of medium access and beamforming training for data transmission. In the DTI, data frames are either exchanged during contention-based access periods (CBAPs) or used for performing contention-free communication during scheduled service periods (SPs).

Since the millimeter wave communication has disadvantages such as large signal attenuation, easy blocking, short coverage distance, high cost of millimeter wave components and high power consumption of millimeter wave communication devices, problems existing in the millimeter wave communication cannot be solved if the millimeter wave devices only adopt millimeter wave links. With the standardization of Multi-Link Operation (MLO) technology in IEEE 802.11be (Wi-Fi 7), a multi-link communication technology combining the millimeter wave link and low-frequency link may be considered based on the MLO architecture and technology. That is, in a device that supports the millimeter wave communication, in addition to one link operating in the millimeter wave band, at least one link operates in the low-frequency band, where control and management functions are implemented in the low-frequency band link, and the millimeter wave link is mainly used for sending high-throughput data. Therefore, for multi-link communication devices that support the millimeter wave communication, how to coordinate the operations between the millimeter wave link and the low-frequency link to meet the communication requirements of the devices while reducing the power consumption of the devices and improving transmission efficiency is a problem that needs to be solved.

Referring to FIG. 6, a flowchart of a method for link operation mode switching provided in an embodiment of the present disclosure is illustrated. The method may be performed by a first device, and at least two links are established between the first device and a second device; where the first device is a non-access point (non-AP) multi-link device and the second device is an AP multi-link device. For example, the first device may be the station 10 in the network architecture illustrated in FIG. 1, and the second device may be the access point 20 in the network architecture illustrated in FIG. 1. The method may include the following steps.

In step 601: link operation mode switch information sent by the second device is received, where the link operation mode switch information is used for indicating at least one non-AP multi-link device to switch a link operation mode of a first link, the first link being one of the at least two links.

In some embodiments, two or more link operation modes may be set for each link in the multi-link device.

In some embodiments, the above link operation mode may be used to define at least one of: a frame type transmitted in the corresponding link, a management manner of the corresponding link, a transmission manner of a management frame of the corresponding link, or the like.

That is, for the same link, under different link operation modes, the frame types transmitted on the link may be different, the management manners of the link may be different, and the transmission manners of the management frame used to manage the link may also be different.

In some embodiments, the second device serves as the AP multi-link device, and the second device may include multiple affiliated APs or affiliated PCPs. The above first link refers to a link established between any one of the affiliated APs/affiliated PCPs in the second device and a non-AP multi-link device. Further, in a case where there are multiple non-AP multi-link devices, the second device may establish a respective first link with each of the multiple non-AP multi-link devices.

From the perspective of the first device, the first device may include multiple affiliated STAs, and the above first link refers to a link established between any one of the affiliated STAs in the first device and a corresponding AP/affiliated PCP in the second device.

For example, the first link is a link between the affiliated AP1 and the affiliated STA1. Assuming that the affiliated AP1 in the AP multi-link device simultaneously establishes a link with the affiliated STA1s in the multiple non-AP multi-link devices, respectively, the links between the affiliated AP1 and multiple affiliated STA1s are all referred to as the first link.

In some embodiments, the above link operation mode switch information is carried in one or more beacon frames, one or more probe response frames sent by periodic scheduling, or one or more other management frames sent by periodic scheduling other than beacon frames and probe response frames.

The above management frame sent by periodic scheduling may be a management frame sent by continuous periodic scheduling, or may be a management frame sent by periodic scheduling during a certain period of time.

For example, the above other management frames sent by periodic scheduling other than beacon frames and probe response frames may include an action frame sent by periodic scheduling. For example, the above link operation mode switch information may be carried in a notification-type action frame (also referred to as a notification frame) sent by periodic scheduling.

In some embodiments, the second device, as the AP multi-link device, may carry the link operation mode switch information through the beacon frames, the probe response frames sent by periodic scheduling, or other management frames sent by periodic scheduling other than beacon frames and probe response frames, and the link operation mode switch information simultaneously instructs one or more non-AP multi-link devices to switch the link operation mode of the first link.

In some embodiments, the beacon frame refers to a management frame regularly sent in the wireless local area network, and is usually sent by the access point device to announce the existence of the WLAN. The beacon frame contains information about the WLAN.

The probe response frame is a response frame sent by the AP multi-link device after receiving the probe request frame sent by the non-AP multi-link device.

In step 602: the link operation mode of the first link between the first device and the second device is switched according to the link operation mode switch information in a case where the first device belongs to the at least one non-AP multi-link device.

In some embodiments, in a case where the first device determines that the first device itself belongs to the at least one non-AP multi-link device indicated by the link operation mode switch information, the link operation mode of the first link between the first device and the second device may be switched according to the above link operation mode switch information.

For example, assuming that the AP multi-link device (i.e., the above second device) includes three affiliated APs, which are an affiliated AP corresponding to a 6GHz frequency band, an affiliated AP corresponding to a 5GHz frequency band and an affiliated AP corresponding to a 2.4GHz frequency band, respectively. Correspondingly, the non-AP multi-link device1 and the non-AP multi-link device2 respectively include three affiliated STAs, which are affiliated STAs corresponding to the 6GHz frequency band, affiliated STAs corresponding to the 5GHz frequency band and affiliated STAs corresponding to the 2.4GHz frequency band, respectively. Taking the first link being a 6GHz link (i.e., link operating at the 6GHz) as an example, the AP multi-link device may establish 6GHz links with the affiliated STAs corresponding to the 6GHz frequency band in the non-AP multi-link device1 and the non-AP multi-link device2 via the affiliated AP corresponding to the 6GHz frequency band, respectively, that is, at this time, the first links are established between the AP multi-link device and the two non-AP multi-link devices, respectively. At the same time, the AP multi-link device may also establish other links with the non-AP multi-link device1 and the non-AP multi-link device2 through one or two of the other two affiliated APs, respectively, for example, establish 5GHz links with the non-AP multi-link device1 and the non-AP multi-link device2, respectively; or establish 2.4GHz links with the non-AP multi-link device1 and the non-AP multi-link device2, respectively; or establish 5GHz and 2.4GHz links with the non-AP multi-link device1 and the non-AP multi-link device2, respectively; or establish a 5GHz link with the non-AP multi-link device1 and a 2.4GHz link with the non-AP multi-link device2, respectively; or establish a 2.4GHz link with the non-AP multi-link device1 and establish a 5GHz link with the non-AP multi-link device2, respectively.

When the first link is controlled to switch the link operation mode, if the AP multi-link device needs to simultaneously switch the link operation mode of the 6GHz link between the AP multi-link device and the non-AP multi-link device1 and the link operation mode of the 6 GHz link between the AP multi-link device and the non-AP multi-link device2, the above AP multi-link device may broadcast the link operation mode switch information to the non-AP multi-link device1 and the non-AP multi-link device2 (e.g., send by the beacon frame), and the link operation mode switch information may indicate which non-AP multi-link devices need to switch the link operation mode of the 6GHz link. After receiving the above beacon frame, the non-AP multi-link device1 and the non-AP multi-link device2 determine that they belong to the devices that need to switch the link operation mode of the 6GHz link, and may switch the link operation mode of their own 6GHz link according to the link operation mode switch information.

In summary, according to the solution shown in the embodiments of the present disclosure, multiple link operation modes are set for the link established by the multi-link device, the non-AP multi-link device may receive the link operation mode switch information sent by the AP multi-link device, and when the non-AP multi-link device is one of at least one non-AP multi-link device indicated by the link operation mode switch information, the non-AP multi-link device may switch, according to the link operation mode switch information, the link operation mode of the first link between the non-AP multi-link device and the AP multi-link device, thereby improving the flexibility of link management between the multi-link devices.

Referring to FIG. 7, a flowchart of a method for link operation mode switching provided in an embodiment of the present disclosure is illustrated. The method may be performed by a second device, and the second device has at least two links established with at least one non-AP multi-link device, the second device being an AP multi-link device. For example, the above non-AP multi-link device may be the station 10 in the network architecture illustrated in FIG. 1, and the second device may be the access point 20 in the network architecture illustrated in FIG. 1. The method may include the following steps.

In step 701: link operation mode switch information is sent to the at least one non-AP multi-link device, where the link operation mode switch information is used for indicating the at least one non-AP multi-link device to switch a link operation mode of a first link, the first link being one of the at least two links.

In step 702: the link operation mode of the first link between a first device and the second device is switched according to the link operation mode switch information, the first device belonging to the at least one non-AP multi-link device.

In a case where the at least one non-AP multi-link device includes multiple non-AP multi-link devices, for each non-AP multi-link device, the second device may switch the link operation mode of the first link between the second device and each non-AP multi-link device according to the link operation mode switch information.

In summary, according to the solution shown in the embodiments of the present disclosure, multiple link operation modes are set for the link established by the multi-link device, the AP multi-link device may send the link operation mode switch information to the non-AP multi-link device, and then, for one non-AP multi-link device among at least one non-AP multi-link device indicated by the link operation mode switch information, the AP multi-link device may switch, according to the link operation mode switch information, the link operation mode of the first link between the AP multi-link device and the one non-AP multi-link device, thereby improving the flexibility of link management between the multi-link devices.

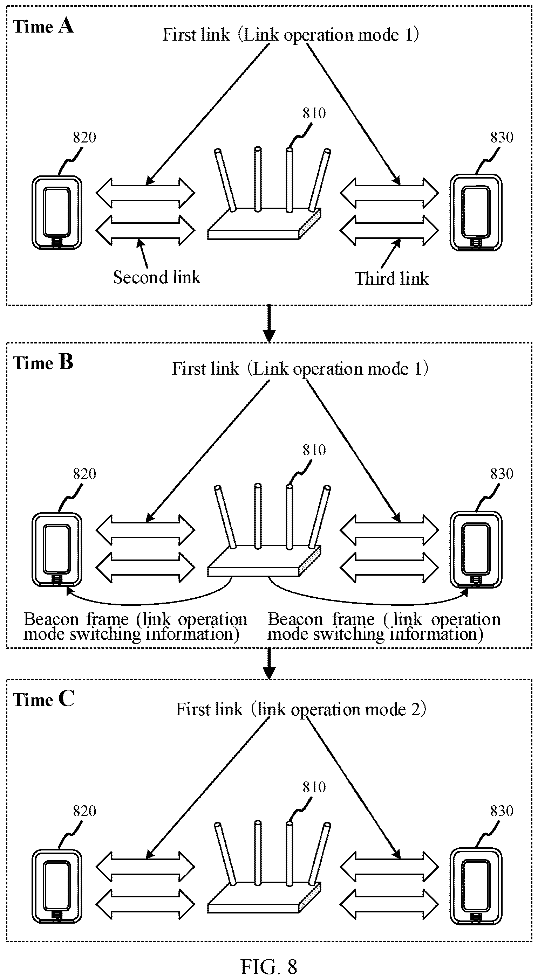

Based on the embodiments illustrated in FIG. 6 and FIG. 7 above, referring to FIG. 8, a schematic diagram of link operation mode switching involved in the embodiments of the present disclosure is illustrated. Taking sending the link operation mode switch information through the beacon frame as an example, as illustrated in FIG. 8, at a time point A, two links are established between an AP multi-link device 810 and a non-AP multi-link device 820, which are a first link and a second link, respectively; while two links are established between the AP multi-link device 810 and a non-AP multi-link device 830, which are a first link and a third link, respectively; and both of the above two first links operate in link operation mode 1.

At a time point B, the AP multi-link device 810 needs to switch the link operation mode of the two first links, respectively. At this time, the AP multi-link device 810 sends a beacon frame, in which the beacon frame includes link operation mode switch information. The link operation mode switch information indicates that the non-AP multi-link device 820 and the non-AP multi-link device 830 need to switch the link operation mode of the first links, respectively; and the non-AP multi-link device 820 and the non-AP multi-link device 830 may both receive the beacon frame.

At a time point C, the AP multi-link device 810 switches the link operation mode of the two first links (e.g., switches to link operation mode 2) according to the link operation mode switch information, respectively; and the non-AP multi-link device 820 and the non-AP multi-link device 830 determine that they belong to the devices that are indicated by the link operation mode switch information and need to switch the link operation mode of the first link, and switch the link operation mode of their respective first links to link operation mode 2 according to the link operation mode switch information.

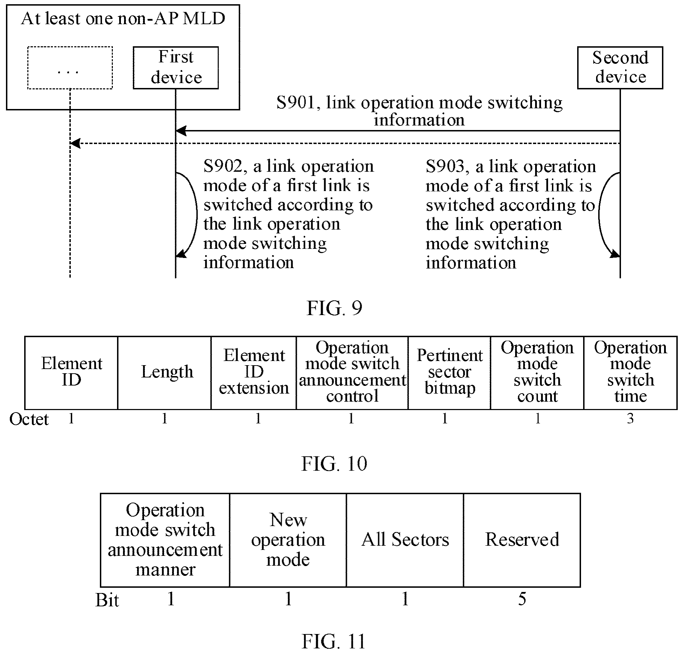

Based on the embodiments illustrated in FIG. 6 and FIG. 7 above, referring to FIG. 9, a flowchart of a method for link operation mode switching provided in the embodiments of the present disclosure is illustrated. The method may be interactively executed by a first device and a second device, and at least two links are established between the first device and the second device, the first device being a non-access point AP multi-link device and the second device being an AP multi-link device. For example, the above first device may be the station 10 in the network architecture illustrated in FIG. 1, and the second device may be the access point 20 in the network architecture illustrated in FIG. 1. The method may include the following steps.

In step 901: a second device sends link operation mode switch information to at least one non-AP multi-link device; and a first device receives the link operation mode switch information sent by the second device.

In some embodiments, the above at least one non-AP multi-link device includes multi-link devices each having a first link established with the second device, and the second device has at least two links including the first link established with each of the at least one non-AP multi-link device.

The above link operation mode switch information is used for indicating the at least one non-AP multi-link device to switch a link operation mode of the first link.

In some embodiments, the link operation mode includes: a multi-link operation (MLO)-based controlled operation mode and an MLO-based independent operation mode.

The MLO-based controlled operation mode refers to a mode in which data transmission on a corresponding link in MLO of established links is managed and controlled by other links (also referred to as management and control links). The MLO-based controlled operation mode may also be referred to as an MLO-based management and control link forced enabled operation mode, that is, under this mode, the management and control link operates in the forced enabled operation mode.

The MLO-based independent operation mode refers to a mode in which data transmission on a corresponding link in the MLO of established links is managed and controlled by the corresponding link. The MLO-based independent operation mode may also be referred to as an MLO-based management and control link non-forced enabled operation mode, that is, under this mode, the management and control link operates in the non- forced enabled operation mode, that is, the management and control link may be in a disabled state or a power save state.

The above MLO-based independent operation mode may also be referred to as a semi-independent operation mode. The so-called semi-independent operation mode means that a link is operable only in the MLO, that is, the setup of the link depends on the setup of multi-links including such link on other links, and/or the link may be operated as one of at least two established links only when there are the at least two established links.

In some embodiments, a link in the MLO-based independent operation mode among the at least two links is used for transmitting at least one of following management frames:
a beacon frame, an individually addressed class 3 management frame, an individually addressed deauthentication frame, an individually addressed disassociation frame or an individually addressed multi-link probe request.

In some embodiments, a link in the MLO-based controlled operation mode among the at least two links is not used for transmitting at least one of following management frames:
a beacon frame, an individually addressed class 3 management frame, an individually addressed deauthentication frame, an individually addressed disassociation frame or an individually addressed multi-link probe request.

In some embodiments, two operation modes of the link are defined: the MLO-based independent operation mode (i.e., an MLO-based management and control link non-forced enabled operation mode, referred to as the independent operation mode for short) and the MLO-based controlled operation mode (i.e., an MLO-based management and control link forced enabled operation mode, referred to as the controlled operation mode for short).

For the AP multi-link device, one or more links established between an affiliated AP/affiliated PCP and one or more other non-AP link devices may constitute a basic service set (BSS); and then, the operation mode of the link established by the affiliated AP/affiliated PCP in the AP multi-link device may be referred to as an independent operation mode of a BSS or a controlled operation mode of a BSS.

The above independent operation mode of a BSS or link means that the BSS or link may independently manage and control its own BSS or link and perform data communication, which mainly includes that in the BSS or link, the corresponding AP sends beacon frames or probe response frames or the like by periodic scheduling, and may exchange specific management frames (such as Class 3 management frames, deauthentication frames, disassociation frames or the like) in the BSS or link.

The above controlled operation mode of a BSS or link means that the BSS or link is managed and controlled by another BSS or link (referred to as the management and control BSS or link), which mainly includes that in the BSS or link, the corresponding AP does not send beacon frames or probe response frames or the like by periodic scheduling, and cannot exchange specific management frames (such as Class 3 management frames, deauthentication frames, disassociation frames or the like). Its communication is managed and controlled by the management and control BSS or link.

In some embodiments, the operation that the second device sends the link operation mode switch information to the at least one non-AP multi-link device includes:
sending the link operation mode switch information to the at least one non-AP multi-link device via a second link in a case where the first link is in an MLO-based controlled operation mode.

Correspondingly, the operation that the first device receives the link operation mode switch information sent by the second device includes:
receiving the link operation mode switch information via a second link in a case where the first link is in an MLO-based controlled operation mode, the second link being a link for managing and controlling the first link.

In the case where the first link between the first device and the second device operates in the MLO-based controlled operation mode, the beacon frames, the probe response frames sent by periodic scheduling, or other management frames sent by periodic scheduling are not transmitted on the first link between the first device and the second device. Thus, the second device may send the beacon frames, the probe response frames sent by periodic scheduling, or other management frames sent by periodic scheduling carrying the link operation mode switch information via the second link that manages and controls the first link.

In some embodiments, the operation that the second device sends the link operation mode switch information to the at least one non-AP multi-link device includes:
sending the link operation mode switch information to the at least one non-AP multi-link device via the first link and/or sending the link operation mode switch information to the at least one non-AP multi-link device via a second link in a case where the first link is in an MLO-based independent operation mode, the second link being a link for managing and controlling the first link.

Correspondingly, the operation that the first device receives the link operation mode switch information sent by the second device includes:
receiving the link operation mode switch information via the first link and/or receiving the link operation mode switch information via the second link in a case where the first link is in an MLO-based independent operation mode, the second link being a link for managing and controlling the first link.

In the case where the first link between the first device and the second device operates in the MLO-based independent operation mode, the beacon frames, the probe response frames sent by periodic scheduling, or other management frames sent by periodic scheduling are transmitted on the first link itself between the first device and the second device. Thus, the second device may send the beacon frames, the probe response frames sent by periodic scheduling, or other management frames sent by periodic scheduling carrying the link operation mode switch information via the first link.

In some embodiments, the above link operation mode switch information is used for indicating at least one of following information:
whether frame transmission is performed on the first link before switching the link operation mode, a target link operation mode to which the first link is switched, a non-AP multi-link device that performs switching, or an operation mode switch time of the first link.

In some embodiments, the link operation mode switch information includes at least one of following information fields:
an operation mode switch announcement control field, a sector bitmap field or a switch time point indication field;
where the operation mode switch announcement control field includes at least one of following information fields:
   an operation mode switch announcement manner subfield, a new operation mode subfield or an all sectors subfield;
   the operation mode switch announcement manner subfield is used for indicating whether frame transmission is performed on the first link before switching the link operation mode;
   the new operation mode subfield is used for indicating the target link operation mode to which the first link is switched; and
   the all sectors subfield is used for indicating whether to perform switching on a first link of a non-AP multi-link device within all sectors;
   where the sector bitmap field is used for indicating a sector in which a non-AP multi-link device performing link operation mode switching on the first link is located; and
   where the switch time pointindication field is used for indicating a switch time point of the link operation mode of the first link.

In some embodiments, the link operation mode switch information includes the sector bitmap field in a case where the all sectors subfield indicates that switching is not performed on the first link of the non-AP multi-link device within the all sectors.

The information related to a sector where the non-AP multi-link device is located may be determined through beam training.

In some embodiments, in the case where the all sectors subfield indicates that switching is not performed on the first link of the non-AP multi-link device within the all sectors, the second device may send the above link operation mode switch information through the beacon frames, the probe response frames sent by periodic scheduling or other management frames sent by periodic scheduling, in the sector where the non-AP multi-link device that needs to switch the link operation mode of the first link is located.

In some embodiments, in a case where the all sector subfield indicates that switching is not performed on the first link of the non-AP multi-link device within the all sectors, the second device does not send the beacon frames, the probe response frames sent by periodic scheduling, or other management frames sent by periodic scheduling that include the above link operation mode switch information, in a sector which does not include a non-AP multi-link device that needs to switch the link operation mode of the first link.

In the above embodiments, the link operation mode switch information indicates which non-AP multi-link devices within which sectors need to switch the link operation mode of the first link through the all sectors subfield and the sector bitmap field. In other embodiments, the link operation mode switch information may also indicate the non-AP multi-link device that needs to switch the link operation mode of the first link through other information, for example, by means of directly carrying the AID of the non-AP multi-link device, the non-AP multi-link device that needs to switch the link operation mode of the first link is indicated.

In some embodiments, the switch time point indication field includes an operation mode switch count field and an operation mode switch time field;
where the operation mode switch count field is used for indicating the number of reference target beacon transmission times (TBTTs) between a transmission time point of the link operation mode switch information and the switch time point of the link operation mode of the first link; and
the operation mode switch time field is used for indicating a maximum time deviation between a transmission time point of a management frame at which the link operation mode switch information with a value of the operation mode switch count field being a specified value (e.g., 0 or 1) is located and an expected transmission time of a first beacon frame sent after the first link is switched to the MLO-based independent operation mode in a case where the target link operation mode is an MLO-based independent operation mode.

In some embodiments, the above maximum time deviation is less than or equal to one scheduled transmission period of the management frame in which the link operation mode switch information is located.

For example, taking the management frame carrying the link operation mode switch information being a beacon frame as an example, the above maximum time deviation may be less than or equal to the TBTT of the beacon frame carrying the link operation mode switch information.

In some embodiments, the reference TBTT is a TBTT in a second link in a case where an operation mode of the first link is an MLO-based controlled operation mode, the second link being a link for managing and controlling the first link; or
the reference TBTT is a TBTT in the first link in a case where an operation mode of the first link is an MLO-based independent operation mode.

In some embodiments, an operation mode switch announcement element is defined, which is also referred to as an operation mode indication, that is, the above link operation mode switch information. The element is used by the AP to announce that the link involved in the operation mode switching will change the operation mode, that is, switch from the independent operation mode to the controlled operation mode, or switch from the controlled operation mode to the independent operation mode.

In some embodiments, the operation mode switch announcement element mainly includes following fields or subfields.

A new operation mode subfield is used for indicating an operation mode to be switched. In a case where the value of the new operation mode subfield is 0, it means switching to the controlled operation mode. In a case where the value of the new operation mode subfield is 1, it means switching to the independent operation mode.

An all sectors subfield is used for indicating whether the operation mode switch is pertinent to all supported sectors. In a case where the value of the all sectors subfield is 0, it indicates that there is no pertinent sector bitmap field and means that the operation mode switch is pertinent to all supported sectors. In a case where the value of the all sectors subfield is 1, it indicates that there is a pertinent sector bitmap field, and the pertinent sector is indicated by the pertinent sector bitmap field.

A pertinent sector bitmap field is used for indicating a bitmap pertinent to the operation mode switch. In the bitmap, a bit value of a position of one bit is 0, indicating that the operation mode switch on a sector ID corresponding to the position of the bit is not pertinent. A bit value of a position of one bit is 1, indicating that the operation mode switch on a sector ID corresponding to the position of the bit is pertinent.

An operation mode switch count field is used for indicating the number of reference TBTTs until an AP corresponding to the operation mode switch switches to a new operation mode. When the AP corresponding to the operation mode switch is in the controlled operation mode before the operation mode switch is completed and no beacon frame is sent, the reference TBTT is a TBTT on the management control link that manages and controls the link where the AP is located. When the AP corresponding to the operation mode switch is in the independent operation mode before the operation mode switch, the reference TBTT is a TBTT of the link where the AP corresponding to the operation mode switch is located. The value of the operation mode switch count field is 1, indicating that the operation mode switch occurs at the next TBTT. The value of the operation mode switch count field is 0, indicating that the operation mode switch occurs at any time after the frame carrying the element is sent.

An operation mode switch time field is mainly used in a case of switching from the controlled operation mode to the independent operation mode, that is, the new operation mode is the independent operation mode, the operation mode switch time field is used for indicating a maximum time deviation between a transmission time of a beacon whose operation mode switch count with a value of 1 on the control and management link and an expected transmission time of a first beacon frame sent after a link that performs mode switching is switched to the independent operation mode, its unit being a time unit (TU), and in Wi-Fi, 1TU is equal to 1024 microseconds (*µs*). In particular, when the operation mode switch announcement element is carried in the Per-STA Profile subelement in the basic multi-link element and corresponds to a reported AP, the operation mode switch time field indicates a maximum time deviation between a transmission time of a beacon whose value of the operation mode switch count field on the link that sends the operation mode switch announcement element (i.e., carried in the basic multi-link element) is a specified value (e.g., 1) and an expected transmission time of a first beacon frame sent on a link corresponding to the reported AP (i.e., the link performing the mode switch) after the independent operation mode is switched.

In some embodiments, referring to FIG. 10, a format definition diagram of an operation mode switch announcement element involved in the embodiments of the present disclosure is illustrated.

As illustrated in FIG. 10, an Element ID field, a Length field and an Element ID Extension field may be defined in accordance with the IEEE 802.11 specification.

Referring to FIG. 11, a format definition diagram of an operation mode switch announcement control field involved in an embodiment of the present disclosure is illustrated.

As illustrated in FIG. 11, an operation mode switch announcement manner subfield is used for indicating any transmission restrictions until the operation mode switch is completed. The AP may set the value of the operation mode switch announcement manner subfield to be 0 or 1. In a case where the STA receives the operation mode switch announcement manner subfield with a value of 1, any frames will not be transmitted until the scheduled operation mode switch occurs. In a case where the value of the operation mode switch announcement manner subfield is 0, no arbitrary requirement is imposed on the STA that receives the operation mode switch announcement manner subfield.

In step 902: in a case where the first device belongs to the at least one non-AP multi-link device, the first device switches the link operation mode of the first link between the first device and the second device according to the link operation mode switch information.

The operation mode switch is used to change the link operation mode of one BSS or one link, that is, switching from the independent operation mode of the BSS or the link to the controlled operation mode, or switching from the controlled operation mode of the BSS or the link to the independent operation mode.

In step 903: in a case where the first device belongs to the at least one non-AP multi-link device, the second device switches the link operation mode of the first link between the first device and the second device.

For the BSS or link that is to perform operation mode switching, the corresponding AP on the BSS or the link may notify the associated stations to perform operation mode switching by carrying or adopting the operation mode switch announcement element in the beacon frames, probe response frames sent by periodic scheduling or other management frames sent by periodic scheduling. Alternatively, the management and control BSS or link (BSS 2 or link 2) of the BSS or link (BSS 1 or link 1) notifies the associated stations on the BSS 1 or link 1 to perform operation mode switching by including the operation mode switch announcement element in the relevant information of the reported AP (i.e., the corresponding AP of BSS1 or link 1 is taken as the reported AP) carried in the probe response frame sent by periodic scheduling or other management frames sent by periodic scheduling.

In some embodiments, the AP multi-link device may send a series of operation mode switch announcement elements through the beacon frames, the probe response frames sent by periodic scheduling or other management frames sent by periodic scheduling to schedule mode switching for a BSS or link that will perform mode switching, ensuring that the stations or multi-link devices (including stations or multi-link devices in power save mode) on the BSS or link that will perform mode switching have the opportunity to receive at least one operation mode switch announcement element. The AP may send a frame carrying an operation mode switch announcement element in the BSS without backoff by determining that the wireless medium is idle at a PIFS time interval.

In some embodiments, in a case where an operation mode of the first link is the MLO-based controlled operation mode, an affiliated station corresponding to a second link in the first device is in at least one of following types of mode or state:
active mode, intermittent awake state in power save mode or continuous awake state in the power save mode;
where the second link is a link for managing and controlling the first link.

In some embodiments, in a case where an operation mode of the first link is the MLO-based independent operation mode, an affiliated station corresponding to a second link in the first device is in at least one of following types of mode or state:
active mode, intermittent awake state in power save mode, continuous awake state in the power save mode or continuous doze state in the power save mode; where the second link is a link for managing and controlling the first link.

In some embodiments, in the case where an operation mode of the first link is the MLO-based controlled operation mode, an affiliated AP corresponding to a second link in the second device is in at least one of the following modes or states:
active mode, intermittent awake state in power save mode or continuous awake state in the power save mode;
where the second link is a link for managing and controlling the first link.

In some embodiments, in the case where an operation mode of the first link is the MLO-based independent operation mode, an affiliated AP corresponding to a second link in the second device is in at least one of the following modes or states:
active mode, intermittent awake state in power save mode, continuous awake state in the power save mode or continuous doze state in the power save mode; where the second link is a link for managing and controlling the first link.

The above link operation mode may be associated with the power save mode/active mode of the link. For example, when the affiliated station and/or affiliated AP corresponding to a link needs to save power to reduce consumption, the continuous doze state in the power save mode may be entered, and thus, the link may be switched to the MLO-based controlled operation mode and no beacon frame and specific management frame is transmitted on the link. When a link needs to give priority to ensuring transmission performance or undertake management tasks for other links, the corresponding affiliated station and/or affiliated AP may enter the continuous awake state/intermittent awake state in the active mode, and thus, the link may be switched to the MLO-based independent operation mode to transmit the beacon frames, the probe response frames and other specific management frames.

In some embodiments, the at least two links include at least one link operating in a millimeter wave (mmWave) band.

The present disclosure proposes an MLO-based enhanced wireless link management method, based on the MLO architecture, the MLO-based millimeter wave communication device may adopt the multi-link communication technology combining the millimeter wave link and low-frequency link, that is, in addition to one or more links operating in the millimeter wave band, at least one link operating in the low frequency band. The control and management functions are implemented in the low frequency band link, and the millimeter wave link is mainly used for sending high-throughput data. Based on the above scheme, the millimeter wave link may adopt an independent operation mode and a controlled operation mode, and may coordinate the operation between the millimeter wave link and the low-frequency link by operation mode switch, which not only meets the communication requirements of the device, but also reduces the power consumption of the device and improves the transmission efficiency.

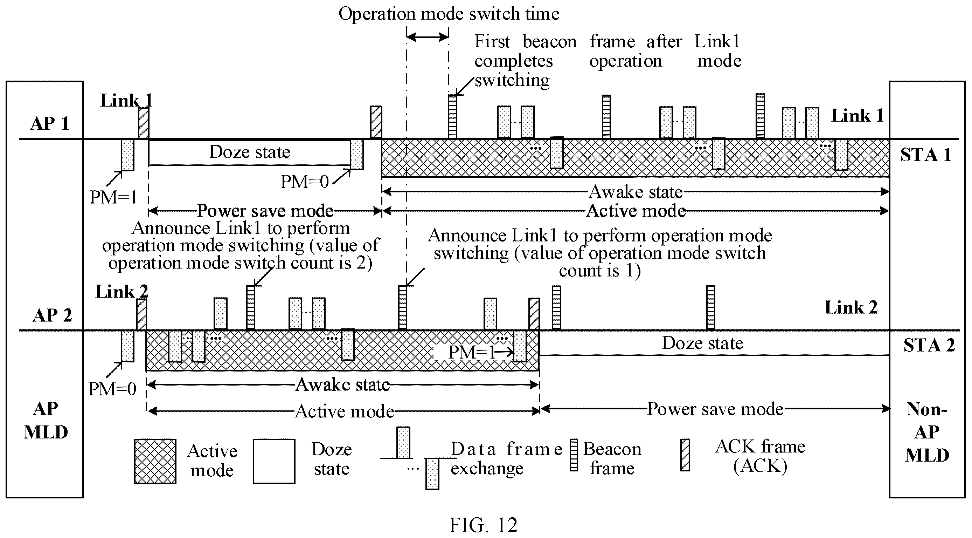

Based on any of the embodiments illustrated in FIG. 6 to FIG. 9 above, referring to FIG. 12, a schematic diagram of operation mode switching provided by an exemplary embodiment of the present disclosure is illustrated. As illustrated in FIG. 12, an example of a method for operation mode switching in which a controlled operation mode is switched to an independent operation mode is described.

As illustrated in FIG. 12, an access point multi-link device (AP MLD) has two links, where Link 1 is a high-frequency link, such as a millimeter wave link (i.e., operating in the millimeter wave band), and may operate in an independent operation mode or a controlled operation mode. Link 2 is a management and control link, which may be a low-frequency link (i.e., operating in a frequency band below 7 GHz), and may manage and control communications on Link 1. A non-AP MLD is associated with the AP MLD and establishes two links with the AP MLD, that is, Link 1 and Link 2.

Initially, Link1 is in the controlled operation mode, that is, AP1 of the AP MLD does not send the beacon frames, and its communication is managed and controlled by Link2; while on Link2, AP2 notifies stations or non-AP MLD devices that could receive the beacon frames, the probe response frames sent by periodic scheduling, or other management frames sent by periodic scheduling of information about Link1 or the AP corresponding to Link1 (i.e., the reported AP) by carrying related information of Link1 in the beacon frames, the probe response frames sent by periodic scheduling or other management frames sent by periodic scheduling. For the non-AP MLD, when Link 1 is in the controlled operation mode, station2 on Link 2 operates in the awake state in the active mode to ensure that the management information on Link 1 may be obtained in time while the management information on Link 2 is obtained; and STA1 on Link 1 is in the doze state in the power save mode to achieve the power save requirements.

After some periods of time, AP2 of the AP MLD notifies BSS1 or Link1 that operation mode switching will be performed by including an operation mode switch announcement element (e.g., the operation mode switch announcement element is included in the per-STA Profile subelement corresponding to Link 1 in the basic multi-link element carried by the beacon frame) in the related information of the reported AP (i.e., the corresponding AP of BSS 1 or Link 1 as the reported AP) carried in its transmitted beacon frames, the probe response frames sent by periodic scheduling or other management frames sent by periodic scheduling. When the value of the new operation mode subfield in the carried operation mode switch announcement element is 1, it means that Link 1 will be switched to the independent operation mode; the operation mode switch count field indicates the number of reference TBTTs (i.e., TBTTs of Link 2) until the AP corresponding to the operation mode switching (i.e., the AP corresponding to Link 1) is switched to the new operation mode; the operation mode switch time field is used for indicating a maximum time deviation between the transmission time of the beacon on the control and management link (i.e., Link 2) carrying the operation mode switch count of 1 for the corresponding link (i.e., Link 1) and the expected transmission time of the first beacon frame sent after the link (i.e., Link 1) that performs mode switching is switched to the independent operation mode.

After receiving the operation mode switch announcement element, STA2 of the non-AP MLD on Link 2 knows that operation mode switching will be performed on Link 1, and then, STA 1 of the non-AP MLD on Link 1 is switched from the power save mode to the active mode. After the AP MLD sends the beacon carrying the operation mode switch announcement element with the value of the operation mode switch count field being 1 on Link 2, the AP MLD sends the first beacon frame on Link 1 after switching to the independent operation mode, after the operation mode switch time indicated by the operation mode switch time field, to complete the switch from the controlled operation mode to the independent operation mode, and then AP1 sends beacon frames, probe response frames or other specific management frames on Link 1 by periodic scheduling. After the switch from the controlled operation mode to the independent operation mode for Link 1 is completed, the non-AP MLD switches the mode of STA 2 from the active mode to the doze state in the power save mode on Link 2, so as to achieve the power save effect of STA 2 while maintaining communication with the AP MLD on Link 1.

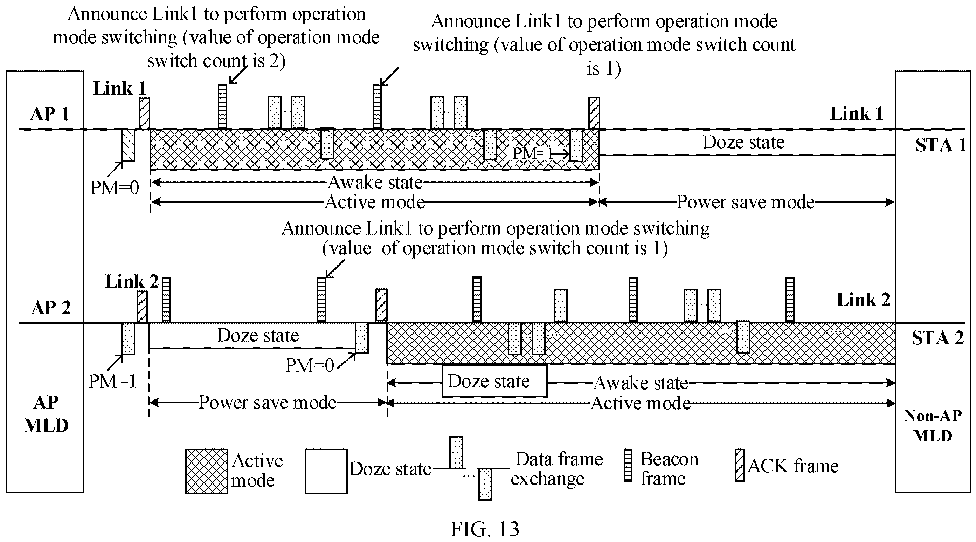

Based on any of the embodiments illustrated in FIG. 6 to FIG. 9 above, referring to FIG. 13, a schematic diagram of operation mode switching provided by an exemplary embodiment of the present disclosure is illustrated. As illustrated in FIG. 13, an example of a method for operation mode switching in which an independent operation mode is switched to a controlled operation mode is described. An access point multi-link device (AP MLD) has two links, where Link 1 is a high-frequency link, such as a millimeter wave link (i.e., operating in the millimeter wave band), and may operate in an independent operation mode or a controlled operation mode. Link 2 is a management and control link, which may be a low-frequency link (i.e., operating in a frequency band below 7 GHz), and may manage and control communications on Link 1. A non-AP MLD is associated with the AP MLD and establishes two links with the AP MLD, that is, Link 1 and Link 2.

Initially, Link1 is in the independent operation mode, that is, AP1 of the AP MLD sends the beacon frames on Link1; while on Link2, AP2 notifies stations or non-AP MLD devices that could receive the beacon frames, the probe response frames sent by periodic scheduling, or other management frames sent by periodic scheduling of information about Link1 or the AP corresponding to Link 1 (i.e., the reported AP) by carrying related information of Link1 in the beacon frames, the probe response frames sent by periodic scheduling or other management frames sent by periodic scheduling. For the non-AP MLD, when Link1 is in the independent operation mode, station1 located on Link1 operates in the awake state in the active mode to ensure that the management information on Link1 may be obtained in time, and STA2 on Link 2 is in the doze state in the power save mode to achieve the power save requirements.

After some periods of time, AP1 of the AP MLD notifies BSS1 or link1 that operation mode switching will be performed by carrying an operation mode switch announcement element in its transmitted beacon frames, the probe response frames sent by periodic scheduling, or other management frames sent by periodic scheduling; meanwhile, AP2 notifies BSS1 or Link1 that operation mode switching will be performed by including an operation mode switch announcement element (e.g., the operation mode switch announcement element is included in the per-STA Profile subelement corresponding to Link1 in the basic multi-link element carried by the beacon frame) in the related information of the reported AP (i.e., the BSS1 or corresponding AP of Link 1 as the reported AP) carried in its transmitted beacon frames, the probe response frames sent by periodic scheduling or other management frames sent by periodic scheduling. When the value of the new operation mode subfield in the operation mode switch announcement element carried by AP1 is 0, it means that Link 1 will be switched to the controlled operation mode; and the operation mode switch count field indicates the number of reference TBTTs (i.e., TBTT of Link 1) until the AP corresponding to the operation mode switching (i.e., the AP corresponding to Link 1) is switched to the new operation mode. When the value of the new operation mode subfield value in the operation mode switch announcement element corresponding to Link 1 carried by AP2 is 0, it means that Link 1 will be switched to the controlled operation mode; and the operation mode switch count field indicates the number of reference TBTTs (i.e., TBTTs of Link 1) until the AP corresponding to the operation mode switching (i.e., the AP corresponding to Link 1) is switched to the new operation mode.

After receiving the operation mode switch announcement element, STA2 of the Non-AP MLD on Link 2 knows that operation mode switching will be performed on Link 1 (i.e., switched to the controlled operation mode), and then, STA 2 on Link 2 is switched from the power save mode to the active mode. After the AP MLD sends the beacon carrying the operation mode switch announcement element with the value of the operation mode switch count field value being 1 on Link 1, Link 1 is switched to the controlled operation mode and stops sending the beacon frames, the probe response frames or other specific management frames on Link 1, to complete the switch from independent operation mode to controlled operation mode. After the switch from the controlled operation mode to the independent operation mode for Link 1 is completed, the non-AP MLD switches the mode of STA 1 from the active mode to the doze state in the power save mode on Link 1, so as to achieve the power save effect of STA 1 while maintaining communication with the AP MLD on Link 2.

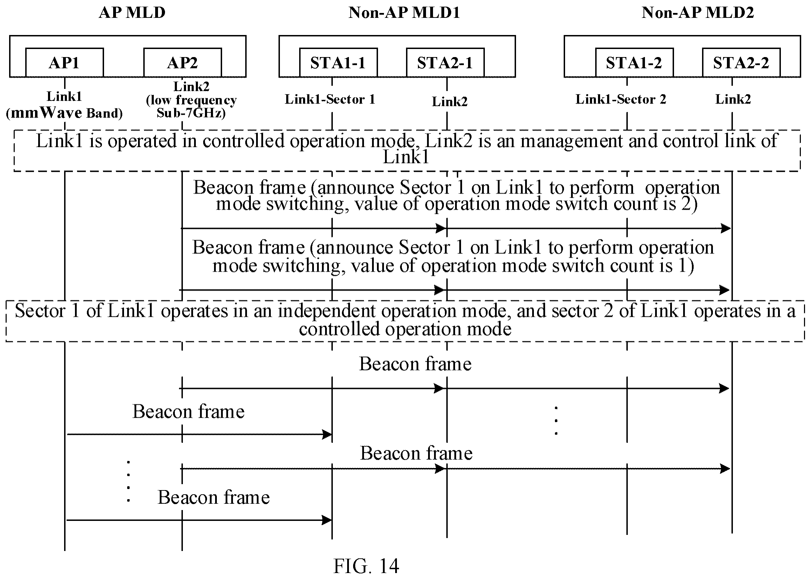

Based on any of the embodiments illustrated in FIG. 6 to FIG. 9 above, referring to FIG. 14, a schematic diagram of operation mode switching provided by an exemplary embodiment of the present disclosure is illustrated. As illustrated in FIG. 14, an example of a method for operation mode switching based on a millimeter wave sector is described. An access point multi-link device (AP MLD) has two links, where Link 1 is a high-frequency link, such as a millimeter wave link (i.e., operating in the millimeter wave band), and may operate in an independent operation mode or a controlled operation mode. Link 2 is a management and control link, which may be a low-frequency link (i.e., operating in a frequency band below 7 GHz), and may manage and control communications on Link 1. Non-AP MLD1 and Non-AP MLD2 are associated with the AP MLD, respectively, and establish two links with the AP MLD, that is, Link 1 and Link 2. STA1-1 of the Non-AP MLD1 operates in sector 1 of millimeter wave link Link 1, and STA1-2 of the Non-AP MLD2 operates in sector 2 of millimeter wave link Link 1.

Initially, Link 1 is in the controlled operation mode, that is, AP1 of AP MLD does not send the beacon frames, the probe response frames sent by periodic scheduling, or other management frames sent by periodic scheduling, and its communication is managed and controlled by Link 2; while on Link2, AP2 notifies stations or non-AP MLD devices that could receive the beacon frames, the probe response frames sent by periodic scheduling, or other management frames sent by periodic scheduling of information about Link1 or the AP corresponding to Link 1 (i.e., the reported AP) by carrying related information of Link1 in the beacon frames, the probe response frames sent by periodic scheduling or other management frames sent by periodic scheduling.

AP2 of the AP MLD notifies sector1 of BSS1 or Link1 that the operation mode switching will be performed by including an operation mode switch announcement element (e.g., the operation mode switch announcement element is included in the per-STA Profile subelement corresponding to Link1 in the basic multi-link element carried by the beacon frame) in the related information of the reported AP (i.e., the corresponding AP of BSS 1 or Link 1 as the reported AP) carried in its transmitted beacon frames, the probe response frames sent by periodic scheduling or other management frames sent by periodic scheduling. When the value of the new operation mode subfield in the carried operation mode switch announcement element is 1, it means that Link1 will be switched to the independent operation mode; the value of the all sectors subfield is 1, indicating that there is a pertinent sector bitmap field, and the pertinent sectors are indicated by the pertinent sector bitmap field. The pertinent sector bitmap field indicates the sectors pertinent to the operation mode switch, and it indicates that sector1 of Link1 is pertinent to the operation mode switch here, and other sectors of Link1 are not pertinent to the operation mode switch. The operation mode switch count field indicates the number of reference TBTTs (i.e., TBTTs of Link2) until the AP corresponding to the operation mode switching (i.e., the AP corresponding to Link1) is switched to the new operation mode.

After receiving the operation mode switch announcement element, STA2-1 of Non-AP MLD1 on Link 2 knows that operation mode switching will be performed on sector1 of Link 1, which is pertinent to STA1-1 of Non-AP MLD1 operating on sector1 of Link1. After receiving the operation mode switch announcement element, STA 2-2 of Non-AP MLD 2 on Link 2 knows that operation mode switching will be performed on sector1 of Link1, which is not pertinent to STA1-2 of Non-AP MLD 2 operating on sector 2 of Link 1. After the AP MLD sends the beacon carrying the operation mode switch announcement element with the value of the operation mode switch count field being 1 on Link 2, the AP MLD sends the first beacon frame on sector 1 of Link 1 after switching to the independent operation mode, to complete the switch of sector 1 of Link 1 from the controlled operation mode to the independent operation mode; and next, AP1 sends the beacon frames, the probe response frames sent by periodic scheduling or other management frames (such as directional multi-gigabit (DMG) beacon frames) sent by periodic scheduling on sector 1 of Link 1. After the operation mode switching is completed, STA1-1 of Non-AP MLD1 operating on sector 1 of Link 1 adopts the independent operation mode.

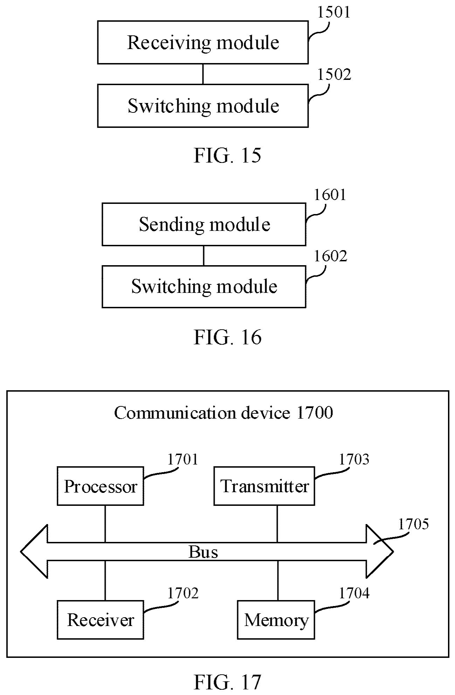

Referring to FIG. 15, a block diagram of an apparatus for link operation mode switching provided in an embodiment of the present disclosure is illustrated. The apparatus has the functions of implementing the steps performed by the first device in the above method for link operation mode switching. As illustrated in FIG. 15, the apparatus may include:
a receiving module 1501, configured to receive link operation mode switch information sent by a second device, where the link operation mode switch information is used for indicating at least one non-AP multi-link device to switch a link operation mode of a first link, the first link being one of at least two links; and the at least two links are established between a first device and the second device, the first device being an non-AP multi-link device and the second device being an AP multi-link device; and
a switching module 1502, configured to switch, according to the link operation mode switch information, the link operation mode of the first link between the first device and the second device in a case where the first device belongs to the at least one non-AP multi-link device.

In some embodiments, the link operation mode switch information is carried in one or more beacon frames, one or more probe response frames sent by periodic scheduling, or one or more other management frames sent by periodic scheduling other than beacon frames and probe response frames.

In some embodiments, the link operation mode includes: an MLO-based controlled operation mode and an MLO-based independent operation mode; where
the MLO-based controlled operation mode refers to a mode in which data transmission on a corresponding link in MLO of established links is managed and controlled by other links; and
the MLO-based independent operation mode refers to a mode in which data transmission on a corresponding link in the MLO of established links is managed and controlled by the corresponding link.

In some embodiments, the link operation mode switch information is used for indicating at least one of following information:
whether frame transmission is performed on the first link before switching the link operation mode, a target link operation mode to which the first link is switched, a non-AP multi-link device that performs switching, or an operation mode switch time of the first link.

In some embodiments, the link operation mode switch information includes at least one of following information fields:
an operation mode switch announcement control field, a sector bitmap field or a switch time point indication field;
where the operation mode switch announcement control field includes at least one of following information fields:
   an operation mode switch announcement manner subfield, a new operation mode subfield or an all sectors subfield;
   the operation mode switch announcement manner subfield is used for indicating whether frame transmission is performed on the first link before switching the link operation mode;
   the new operation mode subfield is used for indicating the target link operation mode to which the first link is switched; and
   the all sectors subfield is used for indicating whether to perform switching on a first link of a non-AP multi-link device within all sectors;
   where the sector bitmap field is used for indicating a sector in which a non-AP multi-link device performing link operation mode switching on the first link is located; and
   where the switch time pointindication field is used for indicating a switch time point of the link operation mode of the first link.

In some embodiments, the link operation mode switch information includes the sector bitmap field in a case where the all sectors subfield indicates that switching is not performed on the first link of the non-AP multi-link device within the all sectors.

In some embodiments, the switch time point indication field includes an operation mode switch count field and an operation mode switch time field;
where the operation mode switch count field is used for indicating a number of reference TBTTs between a transmission time point of the link operation mode switch information and the switch time point of the link operation mode of the first link; and
the operation mode switch time field is used for indicating a maximum time deviation between a transmission time point of a management frame at which the link operation mode switch information with a value of the operation mode switch count field being a specified value is located and an expected transmission time of a first beacon frame sent after the first link is switched to the MLO-based independent operation mode in a case where the target link operation mode is an MLO-based independent operation mode.

In some embodiments, the reference TBTT is a TBTT in a second link in a case where an operation mode of the first link is an MLO-based controlled operation mode, the second link being a link for managing and controlling the first link; or
the reference TBTT is a TBTT in the first link in a case where an operation mode of the first link is an MLO-based independent operation mode.

In some embodiments, the receiving module 1501 is configured to receive the link operation mode switch information via a second link in a case where the first link is in an MLO-based controlled operation mode, the second link being a link for managing and controlling the first link.

In some embodiments, the receiving module 1501 is configured to receive the link operation mode switch information via the first link and/or receive the link operation mode switch information via a second link in a case where the first link is in an MLO-based independent operation mode, the second link being a link for managing and controlling the first link.

In some embodiments, the at least two links include at least one link operating in a mmWave band.

In some embodiments, in a case where an operation mode of the first link is an MLO-based controlled operation mode, the first link is in doze state of power save mode; and
the switching module 1502 is further configured to switch the first link to awake state of active mode in a case where the link operation mode of the first link is switched from the MLO-based controlled operation mode to an MLO-based independent operation mode.

In some embodiments, in a case where an operation mode of the first link is an MLO-based independent operation mode, the first link is in awake state in active mode;
the switching module 1502 is further configured to switch the first link to doze state in power save mode in a case where the link operation mode of the first link is switched from the MLO-based independent operation mode to an MLO-based controlled operation mode.

In some embodiments, a link in the MLO-based independent operation mode among the at least two links is used for transmitting at least one of following management frames:
a beacon frame, an individually addressed class 3 management frame, an individually addressed deauthentication frame, an individually addressed disassociation frame or an individually addressed multi-link probe request.

In some embodiments, a link in the MLO-based controlled operation mode among the at least two links is not used for transmitting at least one of following management frames:
a beacon frame, an individually addressed class 3 management frame, an individually addressed deauthentication frame, an individually addressed disassociation frame or an individually addressed multi-link probe request.

Referring to FIG. 16, a block diagram of an apparatus for link operation mode switching provided in an embodiment of the present disclosure is illustrated. The apparatus has the functions of implementing the steps performed by the second device in the above method for link operation mode switching. As illustrated in FIG. 16, the apparatus may include:
a sending module 1601, configured to send link operation mode switch information to at least one non-AP multi-link device, where the link operation mode switch information is used for indicating the at least one non-AP multi-link device to switch a link operation mode of a first link, the first link being one of at least two links; and
a switching module 1602, configured to switch, according to the link operation mode switch information, the link operation mode of the first link between a first device and a second device, the first device belonging to the at least one non-AP multi-link device; where the second device has at least two links established with the at least one non-AP multi-link device, the first link being one of the at least two links and the second device being an AP multi-link device.

In some embodiments, the link operation mode switch information is carried in one or more beacon frames, one or more probe response frames sent by periodic scheduling, or one or more other management frames sent by periodic scheduling other than beacon frames and probe response frames.

In some embodiments, the link operation mode includes: an MLO-based controlled operation mode and an MLO-based independent operation mode; where
the MLO-based controlled operation mode refers to a mode in which data transmission on a corresponding link in MLO of established links is managed and controlled by other links; and
the MLO-based independent operation mode refers to a mode in which data transmission on a corresponding link in the MLO of established link is managed and controlled by the corresponding link.

In some embodiments, the link operation mode switch information is used for indicating at least one of following information:
whether frame transmission is performed on the first link before switching the link operation mode, a target link operation mode to which the first link is switched, a non-AP multi-link device that performs switching, or an operation mode switch time of the first link.

In some embodiments, the link operation mode switch information includes at least one of following information fields:
an operation mode switch announcement control field, a sector bitmap field or a switch time point indication field;
where the operation mode switch announcement control field includes at least one of following information fields:
   an operation mode switch announcement manner subfield, a new operation mode subfield or an all sectors subfield;
   the operation mode switch announcement manner subfield is used for indicating whether frame transmission is performed on the first link before switching the link operation mode;
   the new operation mode subfield is used for indicating the target link operation mode to which the first link is switched; and
   the all sectors subfield is used for indicating whether to perform switching on a first link of a non-AP multi-link device within all sectors;
   where the sector bitmap field is used for indicating a sector in which a non-AP multi-link device performing link operation mode switching on the first link is located; and
   where the switch time point indication field is used for indicating a switch time point of the link operation mode of the first link.

In some embodiments, the link operation mode switch information includes the sector bitmap field in a case where the all sectors subfield indicates that switching is not performed on the first link of the non-AP multi-link device within the all sectors.

In some embodiments, the switch time point indication field includes an operation mode switch count field and an operation mode switch time field;
where the operation mode switch count field is used for indicating a number of reference TBTTs between a transmission time point of the link operation mode switch information and the switch time point of the link operation mode of the first link; and
the operation mode switch time field is used for indicating a maximum time deviation between a transmission time point of the link operation mode switch information with a value of the operation mode switch count field being a specified value and an expected transmission time of a first beacon frame sent after the first link is switched to the MLO-based independent operation mode in a case where the target link operation mode is an MLO-based independent operation mode.

In some embodiments, the reference TBTT is a TBTT in a second link in a case where an operation mode of the first link is an MLO-based controlled operation mode, the second link being a link for managing and controlling the first link; or
the reference TBTT is a TBTT in the first link in a case where an operation mode of the first link is an MLO-based independent operation mode.

In some embodiments, the sending module 1601 is configured to send the link operation mode switch information to the at least one non-AP multi-link device via a second link in a case where the first link is in an MLO-based controlled operation mode, the second link being a link for managing and controlling the first link.

In some embodiments, the sending module 1601 is configured to send the link operation mode switch information to the at least one non-AP multi-link device via the first link and/or send the link operation mode switch information to the at least one non-AP multi-link device via a second link in a case where the first link is in an MLO-based independent operation mode, the second link being a link for managing and controlling the first link.

In some embodiments, the at least two links include at least one link operating in an mmWave band.

In some embodiments, in a case where an operation mode of the first link is an MLO-based controlled operation mode, the first link is in doze state in power save mode; and
the switching module 1602 is further configured to switch the first link to awake state in active mode in a case where the link operation mode of the first link is switched from the MLO-based controlled operation mode to an MLO-based independent operation mode.

In some embodiments, in a case where an operation mode of the first link is an MLO-based independent operation mode, the first link is in awake state in active mode;
the switching module 1602 is further configured to switch the first link to doze state in power save mode in a case where the link operation mode of the first link is switched from the MLO-based independent operation mode to an MLO-based controlled operation mode.

In some embodiments, a link in the MLO-based independent operation mode among the at least two links is used for transmitting at least one of following management frames:
a beacon frame, an individually addressed class 3 management frame, an individually addressed deauthentication frame, an individually addressed disassociation frame or an individually addressed multi-link probe request.

In some embodiments, a link in the MLO-based controlled operation mode among the at least two links is not used for transmitting at least one of following management frames:
a beacon frame, an individually addressed class 3 management frame, an individually addressed deauthentication frame, an individually addressed disassociation frame or an individually addressed multi-link probe request.

It is to be noted that when the apparatus provided in the above embodiments implement its functions, only the division of each functional module is illustrated as an example. In actual applications, the above functions may be assigned to different functional modules according to actual needs, that is, the content structure of the device may be divided into different functional modules to complete all or part of the functions described above.

Regarding to the apparatus in the above embodiments, the specific manner in which various modules perform operations has been described in detail in the embodiments of the method, which will not be described in detail here.

Referring to FIG. 17, a structural schematic diagram of a communication device 1700 provided by an embodiment of the present disclosure is illustrated. The communication device 1700 may be a multi-link device; and the communication device 1700 may include: a processor 1701, a receiver 1702, a transmitter 1703, a memory 1704 and a bus 1705.

The processor 1701 includes one or more processing cores, and the processor 1701 executes various functional applications and information processing by running software programs and modules.

The receiver 1702 and the transmitter 1703 may be implemented as a communication component, and the communication component may be a communication chip. The communication chip may also be referred to as a transceiver.

The memory 1704 is connected to the processor 1701 via the bus 1705.

The memory 1704 may be configured to store a computer program, and the processor 1701 may be configured to execute the computer program to implement various steps performed by the terminal device in the above method embodiments.

In addition, the memory 1704 may be implemented by any type of volatile or non-volatile storage device or a combination thereof, and the volatile or non-volatile storage devices include but are not limited to: a disk or an optical disk, an electrically erasable programmable read-only memory, an erasable programmable read-only memory, a static random-access memory, a read-only memory, a magnetic memory, a flash memory and a programmable read-only memory.

In an exemplary embodiment, the communication device includes a processor, a memory and a transceiver (the transceiver may include a receiver and a transmitter, the receiver is configured to receive information, and the transmitter is configured to send information).

In a possible implementation, the processor and the transceiver may be configured to perform all or part of the steps performed by the first device or the second device in any of the embodiments of FIG. 6, FIG. 7 or FIG. 9 above, which will not be repeated here.

The embodiments of the present disclosure further provide a computer-readable storage medium, where the computer-readable storage medium has a computer program stored thereon, and the computer program is loaded and executed by a processor to implement various steps performed by the first device or the second device in the method illustrated in any of the embodiments of FIG. 6, FIG. 7 or FIG. 9 above.

The present disclosure further provides a computer program product, the computer program product includes computer instructions, and the computer instructions are stored in a computer-readable storage medium. A processor of a communication device reads the computer instructions from the computer-readable storage medium and executes the computer instructions, to enable the communication device to perform various steps performed by the first device or the second device in the method illustrated in any of the embodiments of FIG. 6, FIG. 7 or FIG. 9 above.

The present disclosure further provides a chip, and the chip is configured to run in a communication device to enable the communication device to perform various steps performed by the first device or the second device in the method illustrated in any of the embodiments of FIG. 6, FIG. 7 or FIG. 9 above.

The present disclosure further provides a computer program, and the computer program is executed by a processor of a communication device to implement various steps performed by the first device or the second device in the method illustrated in any of the embodiments of FIG. 6, FIG. 7 or FIG. 9 above.

Those skilled in the art should be aware that in one or more of the above examples, the functions described in the embodiments of the present disclosure may be implemented in form of hardware, software, firmware or any combination thereof. When implemented in form of software, the functions may be stored in or transmitted as one or more instructions or codes on a computer-readable medium. The computer-readable medium includes a computer storage media and a communication media, where the communication media includes any medium that facilitates the transmission of a computer program from one place to another place. The storage medium may be any available medium accessible by a general purpose or special purpose computer.

The foregoing descriptions are merely optional embodiments of the present disclosure, and are not intended to limit the present disclosure. Any modification, equivalent replacement, improvement or the like made within the spirit and principles of the present disclosure shall be included within the protection scope of the present disclosure.

## Claims

1. A method for link operation mode switching, performed by a first device, wherein at least two links are established between the first device and a second device, the first device being a non-access point (non-AP) multi-link device and the second device being an AP multi-link device; and the method comprises:
receiving link operation mode switch information sent by the second device, wherein the link operation mode switch information is used for indicating at least one non-AP multi-link device to switch a link operation mode of a first link, the first link being one of the at least two links; and
switching, according to the link operation mode switch information, the link operation mode of the first link between the first device and the second device in a case where the first device belongs to the at least one non-AP multi-link device.

2. The method according to claim 1, wherein the link operation mode switch information is carried in one or more beacon frames, one or more probe response frames sent by periodic scheduling, or one or more other management frames sent by periodic scheduling other than beacon frames and probe response frames.

3. The method according to claim 1 or 2, wherein the link operation mode comprises: a multi-link operation (MLO)-based controlled operation mode and an MLO-based independent operation mode; wherein
the MLO-based controlled operation mode refers to a mode in which data transmission on a corresponding link in MLO of established links is managed and controlled by other links; and
the MLO-based independent operation mode refers to a mode in which data transmission on a corresponding link in the MLO of established links is managed and controlled by the corresponding link.

4. The method according to any one of claims 1 to 3, wherein the link operation mode switch information is used for indicating at least one of following information:
whether frame transmission is performed on the first link before switching the link operation mode, a target link operation mode to which the first link is switched, a non-AP multi-link device that performs switching, or an operation mode switch time of the first link.

5. The method according to claim 4, wherein the link operation mode switch information comprises at least one of following information fields:
an operation mode switch announcement control field, a sector bitmap field or a switch time point indication field;
wherein the operation mode switch announcement control field comprises at least one of following information fields:
an operation mode switch announcement manner subfield, a new operation mode subfield or an all sectors subfield;
the operation mode switch announcement manner subfield is used for indicating whether frame transmission is performed on the first link before switching the link operation mode;
the new operation mode subfield is used for indicating the target link operation mode to which the first link is switched; and
the all sectors subfield is used for indicating whether to perform switching on a first link of a non-AP multi-link device within all sectors;
wherein the sector bitmap field is used for indicating a sector in which a non-AP multi-link device performing link operation mode switching on the first link is located; and
wherein the switch time point indication field is used for indicating a switch time point of the link operation mode of the first link.

6. The method according to claim 5, wherein the link operation mode switch information comprises the sector bitmap field in a case where the all sectors subfield indicates that switching is not performed on the first link of the non-AP multi-link device within the all sectors.

7. The method according to claim 5 or 6, wherein the switch time point indication field comprises an operation mode switch count field and an operation mode switch time field;
wherein the operation mode switch count field is used for indicating a number of reference target beacon transmission times (TBTTs) between a transmission time point of the link operation mode switch information and the switch time point of the link operation mode of the first link; and
the operation mode switch time field is used for indicating a maximum time deviation between a transmission time point of a management frame at which the link operation mode switch information with a value of the operation mode switch count field being a specified value is located and an expected transmission time of a first beacon frame sent after the first link is switched to the MLO-based independent operation mode in a case where the target link operation mode is an MLO-based independent operation mode.

8. The method according to claim 7, wherein the reference TBTT is a TBTT in a second link in a case where an operation mode of the first link is an MLO-based controlled operation mode, the second link being a link for managing and controlling the first link; or
the reference TBTT is a TBTT in the first link in a case where an operation mode of the first link is an MLO-based independent operation mode.

9. The method according to any one of claims 1 to 8, wherein receiving the link operation mode switch information sent by the second device comprises:
receiving the link operation mode switch information via a second link in a case where the first link is in an MLO-based controlled operation mode, the second link being a link for managing and controlling the first link.

10. The method according to any one of claims 1 to 8, wherein receiving the link operation mode switch information sent by the second device comprises:
receiving the link operation mode switch information via the first link and/or receiving the link operation mode switch information via a second link in a case where the first link is in an MLO-based independent operation mode, the second link being a link for managing and controlling the first link.

11. The method according to any one of claims 1 to 10, wherein the at least two links comprise at least one link operating in a millimeter wave (mmWave) band.

12. The method according to claim 3, wherein in a case where an operation mode of the first link is the MLO-based controlled operation mode, an affiliated station corresponding to a second link in the first device is in at least one of following types of mode or state:
active mode, intermittent awake state in power save mode or continuous awake state in the power save mode;
wherein the second link is a link for managing and controlling the first link.

13. The method according to claim 3, wherein in a case where an operation mode of the first link is the MLO-based independent operation mode, an affiliated station corresponding to a second link in the first device is in at least one of following types of mode or state:
active mode, intermittent awake state in power save mode, continuous awake state in the power save mode or continuous doze state in the power save mode;
wherein the second link is a link for managing and controlling the first link.

14. The method according to claim 3, wherein a link in the MLO-based independent operation mode among the at least two links is used for transmitting at least one of following management frames:
a beacon frame, an individually addressed class 3 management frame, an individually addressed deauthentication frame, an individually addressed disassociation frame or an individually addressed multi-link probe request.

15. The method according to claim 3, wherein a link in the MLO-based controlled operation mode among the at least two links is not used for transmitting at least one of following management frames:
a beacon frame, an individually addressed class 3 management frame, an individually addressed deauthentication frame, an individually addressed disassociation frame or an individually addressed multi-link probe request.

16. A method for link operation mode switching, performed by a second device, wherein the second device has at least two links established with at least one non-AP multi-link device, the second device being an AP multi-link device; and the method comprises:
sending link operation mode switch information to the at least one non-AP multi-link device, wherein the link operation mode switch information is used for indicating the at least one non-AP multi-link device to switch a link operation mode of a first link, the first link being one of the at least two links; and
switching, according to the link operation mode switch information, the link operation mode of the first link between a first device and the second device, the first device belonging to the at least one non-AP multi-link device.

17. The method according to claim 16, wherein the link operation mode switch information is carried in one or more beacon frames, one or more probe response frames, or one or more other management frames sent by periodic scheduling other than beacon frames and probe response frames.

18. The method according to claim 16 or 17, wherein the link operation mode comprises: an MLO-based controlled operation mode and an MLO-based independent operation mode; wherein
the MLO-based controlled operation mode refers to a mode in which data transmission on a corresponding link in MLO of established links is managed and controlled by other links; and
the MLO-based independent operation mode refers to a mode in which data transmission on a corresponding link in the MLO of established link is managed and controlled by the corresponding link.

19. The method according to any one of claims 16 to 18, wherein the link operation mode switch information is used for indicating at least one of following information:
whether frame transmission is performed on the first link before switching the link operation mode, a target link operation mode to which the first link is switched, a non-AP multi-link device that performs switching, or an operation mode switch time of the first link.

20. The method according to claim 19, wherein the link operation mode switch information comprises at least one of following information fields:
an operation mode switch announcement control field, a sector bitmap field or a switch time point indication field;
wherein the operation mode switch announcement control field comprises at least one of following information fields:
an operation mode switch announcement manner subfield, a new operation mode subfield or an all sectors subfield;
the operation mode switch announcement manner subfield is used for indicating whether frame transmission is performed on the first link before switching the link operation mode;
the new operation mode subfield is used for indicating the target link operation mode to which the first link is switched; and
the all sectors subfield is used for indicating whether to perform switching on a first link of a non-AP multi-link device within all sectors;
wherein the sector bitmap field is used for indicating a sector in which a non-AP multi-link device performing link operation mode switching on the first link is located; and
wherein the switch time point indication field is used for indicating a switch time point of the link operation mode of the first link.

21. The method according to claim 20, wherein the link operation mode switch information comprises the sector bitmap field in a case where the all sectors subfield indicates that switching is not performed on the first link of the non-AP multi-link device within the all sectors.

22. The method according to claim 20 or 21, wherein the switch time point indication field comprises an operation mode switch count field and an operation mode switch time field;
wherein the operation mode switch count field is used for indicating a number of reference TBTTs between a transmission time point of the link operation mode switch information and the switch time point of the link operation mode of the first link; and
the operation mode switch time field is used for indicating a maximum time deviation between a transmission time point of the link operation mode switch information with a value of the operation mode switch count field being a specified value and an expected transmission time of a first beacon frame sent after the first link is switched to the MLO-based independent operation mode in a case where the target link operation mode is an MLO-based independent operation mode.

23. The method according to claim 22, wherein the reference TBTT is a TBTT in a second link in a case where an operation mode of the first link is an MLO-based controlled operation mode, the second link being a link for managing and controlling the first link; or
the reference TBTT is a TBTT in the first link in a case where an operation mode of the first link is an MLO-based independent operation mode.

24. The method according to any one of claims 16 to 23, wherein sending the link operation mode switch information to the at least one non-AP multi-link device comprises:
sending the link operation mode switch information to the at least one non-AP multi-link device via a second link in a case where the first link is in an MLO-based controlled operation mode, the second link being a link for managing and controlling the first link.

25. The method according to any one of claims 16 to 23, wherein sending the link operation mode switch information to the at least one non-AP multi-link device comprises:
sending the link operation mode switch information to the at least one non-AP multi-link device via the first link and/or sending the link operation mode switch information to the at least one non-AP multi-link device via a second link in a case where the first link is in an MLO-based independent operation mode, the second link being a link for managing and controlling the first link.

26. The method according to any one of claims 16 to 25, wherein the at least two links comprise at least one link operating in an mm Wave band.

27. The method according to claim 18, wherein in a case where an operation mode of the first link is the MLO-based controlled operation mode, an affiliated AP corresponding to a second link in the second device is in at least one of following types of mode or state:
active mode, intermittent awake state in power save mode or continuous awake state in the power save mode;
wherein the second link is a link for managing and controlling the first link.

28. The method according to claim 18, wherein in a case where an operation mode of the first link is the MLO-based independent operation mode, an affiliated AP corresponding to a second link in the second device is in at least one of following types of mode or state:
active mode, intermittent awake state in power save mode, continuous awake state in the power save mode or continuous doze state in the power save mode;
wherein the second link is a link for managing and controlling the first link.

29. The method according to claim 18, wherein a link in the MLO-based independent operation mode among the at least two links is used for transmitting at least one of following management frames:
a beacon frame, an individually addressed class 3 management frame, an individually addressed deauthentication frame, an individually addressed disassociation frame or an individually addressed multi-link probe request.

30. The method according to claim 18, wherein a link in the MLO-based controlled operation mode among the at least two links is not used for transmitting at least one of following management frames:
a beacon frame, an individually addressed class 3 management frame, an individually addressed deauthentication frame, an individually addressed disassociation frame or an individually addressed multi-link probe request.

31. An apparatus for link operation mode switching, comprising:
a receiving module, configured to receive link operation mode switch information sent by a second device, wherein the link operation mode switch information is used for indicating at least one non-AP multi-link device to switch a link operation mode of a first link, the first link being one of at least two links; and the at least two links are established between a first device and the second device, the first device being an non-AP multi-link device and the second device being an AP multi-link device; and
a switching module, configured to switch, according to the link operation mode switch information, the link operation mode of the first link between the first device and the second device in a case where the first device belongs to the at least one non-AP multi-link device.

32. An apparatus for link operation mode switching, comprising:
a sending module, configured to send link operation mode switch information to at least one non-AP multi-link device, wherein the link operation mode switch information is used for indicating the at least one non-AP multi-link device to switch a link operation mode of a first link, the first link being one of at least two links; and
a switching module, configured to switch, according to the link operation mode switch information, the link operation mode of the first link between a first device and a second device, the first device belonging to the at least one non-AP multi-link device; wherein the second device has at least two links established with the at least one non-AP multi-link device, the first link being one of the at least two links and the second device being an AP multi-link device.

33. A communication device, wherein the communication device is implemented as a first device, at least two links are established between the first device and a second device, the first device is an non-AP multi-link device, and the second device is an AP multi-link device; and the communication device comprises a processor, a memory and a transceiver; wherein
the transceiver is configured to receive link operation mode switch information sent by the second device, wherein the link operation mode switch information is used for instructing at least one non-AP multi-link device to switch a link operation mode of a first link, the first link being one of the at least two links; and
the processor is configured to switch, according to the link operation mode switch information, the link operation mode of the first link between the first device and the second device in a case where the first device belongs to the at least one non-AP multi-link device.

34. A communication device, wherein the communication device is implemented as a second device, the second device has at least two links established with at least one non-AP multi-link device, and the second device is an AP multi-link device; and the communication device comprises a processor, a memory and a transceiver; wherein
the transceiver is configured to send link operation mode switch information to the at least one non-AP multi-link device, wherein the link operation mode switch information is used for indicating the at least one non-AP multi-link device to switch a link operation mode of a first link, the first link being one of the at least two links; and
the processor is configured to switch, according to the link operation mode switch information, the link operation mode of the first link between the first device and the second device, the first device belonging to the at least one non-AP multi-link device.

35. A computer-readable storage medium, wherein the storage medium has a computer program stored thereon, and the computer program is configured to, when executed by a processor, implement the method for link operation mode switching according to any one of claims 1 to 30.

36. A chip, wherein the chip is configured to run in a communication device, to enable the communication device to perform the method for link operation mode switching according to any one of claims 1 to 30.

37. A computer program product, wherein the computer program product comprises computer instructions, the computer instructions being stored in a computer-readable storage medium; and a processor of a communication device reads the computer instructions from the computer-readable storage medium and executes the computer instructions, to enbale the communication device to perform the method for link operation mode switching according to any one of claims 1 to 30.

38. A computer program, wherein the computer program is executed by a processor of a communication device to implement the method for link operation mode switching according to any one of claims 1 to 30.
